(19)

Europäisches
Patentamt
European
Patent Office
Office européen
des brevets

(11) **EP 1 897 902 A1**

(12) **EUROPEAN PATENT APPLICATION**
published in accordance with Art. 153(4) EPC

(43) Date of publication:
**12.03.2008 Bulletin 2008/11**

(21) Application number: **06731796.6**

(22) Date of filing: **13.04.2006**

(51) Int Cl.:
*C08J 3/03* (2006.01)     *C08L 27/12* (2006.01)

(86) International application number:
**PCT/JP2006/307860**

(87) International publication number:
**WO 2006/109853 (19.10.2006 Gazette 2006/42)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **13.04.2005 JP 2005116348
05.08.2005 JP 2005228632**

(71) Applicant: **DAIKIN INDUSTRIES, LTD.
Osaka-shi, Osaka 530-8323 (JP)**

(72) Inventors:
• **TSUDA, Nobuhiko**
  **c/o DAIKIN INDUSTRIES, LTD.,**
  **Settsu-shi,**
  **Osaka 5668585 (JP)**
• **SAWAUCHI, Chie**
  **c/o DAIKIN INDUSTRIES, LTD.,**
  **Settsu-shi,**
  **Osaka 5668585 (JP)**

(74) Representative: **HOFFMANN EITLE
Patent- und Rechtsanwälte
Arabellastrasse 4
81925 München (DE)**

(54) **PROCESS FOR PRODUCING AQUEOUS FLUOROPOLYMER DISPERSION**

(57) The invention provides a method of producing an aqueous fluoropolymer dispersion by which aqueous fluoropolymer dispersions high in fluoropolymer concentration can be prepared in a short period of time. The present invention provides a method of producing an aqueous fluoropolymer dispersion comprising a step (1) of adding a nonionic surfactant to an aqueous fluoropolymer dispersion to be treated, a step (2) of phase-separating into a supernatant phase and an aqueous fluoropolymer dispersion phase following the step (1), and a step (3) of recovering the aqueous fluoropolymer dispersion phase by removing the supernatant phase, stirring being provided in the step (2).

EP 1 897 902 A1

## Description

### TECHNICAL FIELD

The present invention relates to a method of producing an aqueous fluoropolymer dispersion.

### BACKGROUND ART

An aqueous fluoropolymer dispersion can form films showing such excellent characteristics as chemical stability, nonstickiness and weather resistance by such a technique as coating or impregnation and, therefore, have been widely used in such fields of application as linings for cooking utensils and piping and impregnated glass cloth membranes. In these fields of application, those aqueous fluoropolymer dispersions high in fluoropolymer concentration are preferred and, generally, those obtained by polymerization of a fluorinated monomer(s) in an aqueous medium in the presence of a fluorinated surfactant, followed by concentration are in use.

A method known for concentrating the aqueous fluoropolymer dispersion comprises warming such dispersions in the presence of a specific nonionic surfactant for separation of each thereof into a fluoropolymer-containing phase and a fluoropolymer-free phase and then removing the fluoropolymer-free phase. However, in this phase separation, it is necessary to allow the dispersions to stand under predetermined temperature conditions for a long period of time; hence, the productivity of the method is not so good.

### DISCLOSURE OF INVENTION

PROBLEMS WHICH THE INVENTION IS TO SOLVE

In view of the above-discussed state of the art, it is an object of the present invention to provide a method of producing the aqueous fluoropolymer dispersion by which the aqueous fluoropolymer dispersion high in fluoropolymer concentration can be prepared in a short period of time.

MEANS FOR SOLVING THE PROBLEMS

The present invention provides a method of producing an aqueous fluoropolymer dispersion comprising a step (1) of adding a nonionic surfactant to an aqueous fluoropolymer dispersion to be treated, a step (2) of phase-separating into a supernatant phase and an aqueous fluoropolymer dispersion phase following the step (1), and a step (3) of recovering the aqueous fluoropolymer dispersion phase by removing the supernatant phase, stirring being provided in the step (2).

In the following, the present invention is described in detail.

The method of producing an aqueous fluoropolymer dispersion according to the invention comprises the step (1) of adding a nonionic surfactant to an aqueous fluoropolymer dispersion to be treated.

The aqueous fluoropolymer dispersion to be treated is a dispersion comprising a fluoropolymer dispersed in an aqueous medium.

The aqueous fluoropolymer dispersion to be treated is not particularly restricted but may be any dispersion comprising the fluoropolymer dispersed in the aqueous medium. For example, it may be the aqueous dispersion as polymerized for the production of the fluoropolymer or the aqueous dispersion obtained by subjecting the aqueous dispersion just after polymerization to such an after-treatment as a treatment for reducing the fluorinated anionic surfactant content and/or concentration.

The fluoropolymer in the aqueous fluoropolymer dispersion to be treated is a polymer containing fluorine atoms each bound to a carbon atom.

The fluoropolymer is, for example, an elastomeric fluoropolymer, a non-melt-processable fluoropolymer or a melt-processable fluoropolymer.

The elastomeric fluoropolymer is a noncrystalline fluoropolymer having rubber elasticity generally having a first monomer-derived monomer unit content of 30 to 80% by mass.

The term "first monomer" as used herein means vinylidene fluoride [VDF] or tetrafluoroethylene [TFE] which is now constitutes the largest mass proportion of monomer units among all monomer units in the molecular structure of the elastomeric fluoropolymer.

The term "monomer unit" as used herein referring to the first monomer-derived monomer unit, for instance, means the moiety which is a part of the molecular structure of the fluoropolymer and is derived from the corresponding monomer. The TFE unit, for instance, is the moiety which is a part of the molecular structure of the fluoropolymer and is derived from TFE and is represented by $-(CF_2-CF_2)-$. The above-mentioned "all monomer units" include all monomer-derived moieties in the molecular structure of the fluoropolymer.

As the elastomeric fluoropolymer, there may be mentioned, among others, such TFE-based polymers as TFE/propylene copolymers and TFE/per-fluoro(vinyl ether) copolymers, such hexafluoropropylene [HFP]-based polymers as HFP/ethylene copolymers, and such VDF-based polymers as VDF/HFP copolymers, VDF/chlorotrifluoroethylene [CTFE] copolymers, VDF/TFE copolymers, VDF/perfluoro(alkyl vinyl ether) [PAVE] copolymers, VDF/TFE/HFP copolymers, VDF/TFE/CTFE copolymers and VDF/TFE/PAVE copolymers.

The non-melt-processable fluoropolymer is, for example, polytetrafluoroethylene [PTFE].

In the present specification, the above-mentioned PTFE conceptually includes not only TFE homopolymers but also modifications of polytetrafluoroethylene [modified PTFEs].

The very small proportion monomer in the above modifications includes, for example, fluoroolefins such as HFP and CTFE, fluoro(alkyl vinyl ether) species whose alkyl group contains 1 to 5 carbon atoms, in particular 1 to 3 carbon atoms; fluorodioxole; perfluoroalkylethylenes; and ω-hydroperfluoroolefins, among others.

The content of very small proportion monomer-derived very small proportion monomer units relative to all monomer units in the modified PTFEs is generally within the range of 0.001 to 2 mole percent.

The phrase "content (mole percent) of very small proportion monomer units relative to all monomer units" as used herein means the mole fraction (mole percent) of the very small proportion monomer from which the very small proportion monomer unit is derived, relative to all monomers from which the "all monomer units" are derived, namely the total amount of the monomers involved in the constitution of the fluoropolymer.

The melt-processable fluoropolymer mentioned above is, for example, an ethylene/TFE copolymer [ETFE], a TFE/HFP. copolymer [FEP], a TFE/perfluoro (alkyl vinyl ether) copolymer [TFE/PAVE copolymer], PVDF, a VDF-based copolymer or poly(vinyl fluoride) [PVF].

The TFE/PAVE copolymer includes TFE/perfluoro(methyl vinyl ether) [PMVE] copolymers [MFAs], TFE/perfluoro(ethyl vinyl ether) [PEVE] copolymers, TFE/perfluoro(propyl vinyl ether) [PPVE] copolymers and the like.

The VDF-based copolymer as a melt-processable fluoropolymer includes VDF/TFE copolymers, VDF/HFP copolymers, VDF/CTFE copolymers, VDF/TFE/HFP copolymers, VDF/TFE/CTFE copolymers and the like.

Preferred as the fluoropolymer in the aqueous fluoropolymer dispersion to be treated are perfluoropolymers and, among them, PTFE is more preferred.

The fluoropolymer has an average particle diameter of 50 to 500 nm, preferably 100 to 350 nm.

The average particle diameter is determined in the following manner. A working curve is constructed which shows the relation between the transmittance of incident light rays having a wavelength of 550 nm per unit length of the aqueous dispersion having a fluoropolymer concentration adjusted to 0.22% by mass and the average particle diameter determined by particle diameter measurements in a certain specific direction on a transmission electron photomicrograph, and the average particle diameter of a sample is determined, using the working curve, from the transmittance as measured in the above manner.

The aqueous medium in the aqueous fluoropolymer dispersion to be treated is not particularly restricted but may be any water-containing liquid. Thus, it may contain, in addition to water, a fluorine-free organic solvent and/or a fluorinated organic solvent, such as, for example, an alcohol, ether, ketone or paraffin wax.

The aqueous fluoropolymer dispersion to be treated generally has a fluoropolymer concentration of 20 to 50 parts by mass, preferably 25 to 45 parts by mass, per 100 parts by mass of the aqueous medium.

When the fluoropolymer concentration is lower than 20 parts by mass per 100 parts by mass of the aqueous medium, it may sometimes become difficult to causing separation into the supernatant phase and aqueous fluoropolymer dispersion phase. When it is above 50 parts by mass, it may sometimes become difficult to remove the fluorinated anionic surfactant possibly occurring in the aqueous fluoropolymer dispersion to be treated.

The fluoropolymer concentration (P), so referred to herein, is determined by weighing about 1 g (X) of the sample in an aluminum cup with a diameter of 5 cm, drying the same at 100°C for 1 hour and further at 300°C for 1 hour and making a calculation, based on the heating residue (Z), as follows: P = Z/X x 100 (%).

The aqueous fluoropolymer dispersion to be treated may further contain a surfactant.

The surfactant is not particularly restricted but may be, for example, a nonionic surfactant or anionic surfactant known in the art or a fluorinated surfactant.

The nonionic surfactant may be any one known in the art and includes, among others, ether type nonionic surfactants such as polyoxyethylene alkylphenyl ethers, polyoxyethylene alkyl ethers and polyoxyethylenealkylene alkyl ethers; polyoxyethylene derivatives such as ethylene oxide/propylene oxide block copolymers; ester type nonionic surfactants such as sorbitan fatty acid esters, polyoxyethylenesorbitan fatty acid esters, polyoxyethylenesorbitol fatty acid esters, glycerol fatty acid esters and polyoxyethylene fatty acid esters; amine type nonionic surfactants such as polyoxyethylenealkylamines and alkylalkanolamides; and the like. The nonionic surfactant may be an aromatic compound, a straight chain compound or a branched chain-containing compound. Preferably, however, it is a straight chain compound or branched chain-containing compound having no alkylphenol moiety in the structure thereof. Those examples given later herein as the nonionic surfactants to be added in the step (1) are more preferred.

The anionic surfactant is preferably one comprising a fluorinated anionic compound such as a fluorinated carboxylic acid compound or a fluorinated sulfonic acid compound, more preferably one comprising a fluorinated carboxylic acid compound, still more preferably one comprising a fluorinated carboxylic acid compound containing 5 to 12 carbon atoms.

Also usable as the anionic surfactant are anionic fluorinated surfactants (hereinafter sometimes referred to as "fluorinated anionic surfactants"). Usable as the fluorinated anionic surfactants are such known fluorinated anionic surfactants as perfluorooctanoic acid and salts thereof (hereinafter perfluorooctanoic acid and salts thereof are sometimes collectively referred to as "PFOA" for short) and perfluorooctylsulfonic acid and salts thereof (hereinafter perfluorooctylsulfonic acid and salts thereof are sometimes collectively referred to as "PFOS" for short), among others.

When the PFOA or PFOS is in the form of a salt, the salt is not particularly restricted but may be an ammonium salt, for instance.

The fluorinated surfactant mentioned above may be one added as an emulsifier on the occasion of production of the fluoropolymer, which constitutes the aqueous fluoropolymer dispersion to be treated, by polymerization in the aqueous medium.

The aqueous fluoropolymer dispersion to be treated can be prepared by producing the fluoropolymer by polymerization in the conventional manner, for example by suspension polymerization or emulsion polymerization.

The fluorinated monomer(s) and nonfluorinated monomer(s) and the polymerization initiator and such an additive(s) as a chain transfer agent, which are to be used in such polymerization as mentioned above, can be properly selected from among those respectively known in the art and, in such polymerization, the above-mentioned surfactant can be used.

From the polymerization efficiency viewpoint, such polymerization as mentioned above is preferably carried out in the presence of 0.0001 to 10% by mass of the fluorinated surfactant in the aqueous medium. Specifically, the amount of the fluorinated surfactant may be not smaller than 100 ppm, more specifically not smaller than 1000 ppm, still more specifically not smaller than 1500 ppm, or not smaller than 2000 ppm, or not smaller than 1% by mass, relative to the aqueous medium.

The aqueous fluoropolymer dispersion to be treated may be one obtained after such an after-treatment as treatment for reducing the amount of fluorinated anionic surfactant, for example ion exchange treatment, and/or concentration following the production of the fluoropolymer by polymerization. The aqueous fluoropolymer dispersion to be treated as derived from the aqueous fluoropolymer dispersion as obtained by polymerization by such an after-treatment as mentioned above may sometimes have a fluorinated surfactant concentration, in the aqueous fluoropolymer dispersion to be treated, of 100 ppm or below.

As the ion exchange treatment mentioned above, there may be mentioned, for example, the method comprising treatment with an ion exchanger as described in Japanese Kohyo (Laid-open under PCT) Publication 2002-532583.

The fluorinated anionic surfactant concentration, so referred to herein, is the value obtained by (1) carrying out high-performance liquid chromatography [HPLC] under the conditions given below or (2) adding an equal amount of methanol to the measurement target aqueous fluoropolymer dispersion, subjecting the mixture to Soxhlet extraction and carrying out an HPLC measurement under the conditions given below. The above-mentioned method (1) is suitably applicable to the supernatant phase described later herein and the method (2) is suitably applicable to the aqueous fluoropolymer dispersion phase described later herein.

HPLC measurement conditions

Column: ODS-120T (4.6 ø x 250 mm, product of Tosoh Corp.) Developing solution: Acetonitrile/0.6% (by mass) aqueous perchloric acid solution = 60/40 (vol/vol %)
Sample size: 20 μL
Flow rate: 1.0 ml/minute
Detection wavelength: UV 210 nm
Column temperature: 40°C
Determination limit: 10 ppm

In calculating the fluorinated anionic surfactant concentration, use was made of a working curve obtained by subjecting aqueous fluorinated anionic surfactant solutions with known concentrations to HPLC measurements using the above-mentioned developing solution under the conditions mentioned above.

As the nonionic surfactant to be added, in the above-mentioned step (1), to the aqueous fluoropolymer dispersion to be treated, there may be mentioned, for example, those enumerated hereinabove as examples referring to the aqueous fluoropolymer dispersion to be treated. Among them, those having a polyoxyethylene alkyl ether structure are preferred, those having a polyoxyethylene alkyl ether structure whose alkyl group contains 10 to 20 carbon atoms are more preferred, and those having a polyoxyethylene alkyl ether structure whose alkyl group contains 10 to 15 carbon atoms are still more preferred. As such a nonionic surfactant having the polyoxyethylene alkyl ether structure, there may be mentioned Noigen TDS-80 (product of Daiichi Kogyo Seiyaku Co.).

In the above step (1), the nonionic surfactant is preferably added in an amount of 5 to 30 parts by mass per 100 parts by mass of the fluoropolymer in the aqueous fluoropolymer dispersion to be treated.

When the amount of the nonionic surfactant is smaller than 5 parts by mass per 100 parts by mass of the fluoropolymer, it may become difficult to separate the supernatant phase and the aqueous fluoropolymer dispersion phase and, when it is above 30 parts by mass per 100 parts by mass of the fluoropolymer, the economical efficiency will be decreased.

The level of addition of the nonionic surfactant in the step (1) is more preferably within a range from a more preferred lower limit of 10 parts by mass to a more preferred upper limit of 25 parts by mass, per 100 parts by mass of the fluoropolymer.

The nonionic surfactant content (N), so referred to herein, is determined by weighing about 1 g (X) of the sample in an aluminum cup with a diameter of 5 cm, drying the same at 100°C for 1 hour to give a heating residue (Y) and further at 300°C for 1 hour to give a heating residue (Z), and making a calculation as follows: $N = (Y - Z)/X \times 100$ (%).

The above step (1) preferably comprises the operation of stirring the aqueous fluoropolymer dispersion under treatment. By stirring the aqueous fluoropolymer dispersion under treatment, it becomes possible for the nonionic surfactant added to be uniformly dispersed in the aqueous fluoropolymer dispersion under treatment and rapidly migrate with ease into the supernatant phase in the step (2) to be described later herein; hence, it becomes possible to further shorten the time required for the step.

In the above step (1), the nonionic surfactant may be added, for example, (i) to the treatment target aqueous fluoropolymer dispersion with stirring following starting stirring the aqueous fluoropolymer dispersion in advance or (ii) to the aqueous fluoropolymer dispersion to be treated as allowed to stand, followed by starting stirring.

The addition of the nonionic surfactant may be made after adjustment of the aqueous fluoropolymer dispersion to be treated to pH 3 to 12 with aqueous ammonia, for instance.

The addition of the nonionic surfactant in the above step (1) is preferably made under such conditions that the temperature of the aqueous fluoropolymer dispersion under treatment is not higher than the temperature at which phase separation is caused in the step (2).

When the addition of the nonionic surfactant is made within such a temperature range as mentioned above in the practice of the invention, the separation into the supernatant phase and aqueous fluoropolymer dispersion phase, which is described later herein, is favorably accelerated and the viscosity stability of the aqueous fluoropolymer dispersion obtained by phase separation is favorably improved.

The liquid temperature of the treatment target aqueous fluoropolymer dispersion to which the nonionic surfactant is added may vary according to the nonionic surfactant species employed but, generally, it is a temperature at which the nonionic surfactant can be uniformly dispersed in the aqueous fluoropolymer dispersion under treatment. That temperature is generally not higher than the cloud point and, in the case of the above-mentioned Noigen TDS-80, for instance, it is preferably 30 to 50°C.

The "temperature at which phase separation is caused in the step (2)", so referred to herein, is generally the temperature within the range of the temperature at which the rate of separation into the supernatant phase and aqueous fluoropolymer dispersion phase following the addition of the nonionic surfactant in the above step (1) in the practice of the invention becomes maximal (such temperature hereinafter referred to as "phase separation temperature") plus/minus 5°C.

The phase separation temperature mentioned above is not always identical to the cloud point of the nonionic surfactant but may vary depending on the coexisting electrolyte, anionic surfactant species, amount thereof and so forth. Generally, however, it is not lower by 20°C than the cloud point of the nonionic surfactant added and not higher by 20°C than the cloud point, more specifically within the temperature range of 40 to 90°C.

The cloud point mentioned above means the temperature at which an aqueous solution of the nonionic surfactant after once becoming cloudy upon heating again becomes wholly transparent upon gradual cooling.

In the present specification, the cloud point is the value measured according to ISO 1065 (Method A), namely by placing 15 ml of a diluted measurement sample in a test tube, heating the sample until becoming completely opaque, then gradually cooling the same with stirring and determining the temperature at which the whole liquid becomes transparent.

When the nonionic surfactant is added at a temperature lower than the phase separation temperature in the above step (1), the step may comprise the procedure for raising the temperature after such addition.

The temperature raising conditions can be properly selected according to the fluoropolymer and nonionic surfactant species used and amounts thereof, among others.

The temperature raising in the step (1) is generally carried out until arrival of the aqueous dispersion after addition at the temperature at which the phase separation is caused in the step (2).

The step (2) according to the invention is the step of phase separating, following the above-mentioned step (1), into the supernatant phase and the aqueous fluoropolymer dispersion phase.

The step (2) according to the invention is generally distinguishable from the above-mentioned step (1) in that, in the practice of the invention, the step (2) passes through the point of time at which the temperature arrives at a level such that the rate of separation into the supernatant phase and aqueous fluoropolymer dispersion phase following the addition of the nonionic surfactant in the step (1) may arrive at a maximum value and the point of time at which the volumes of the supernatant phase and the aqueous fluoropolymer dispersion phase resulting from the separation respectively become constant.

The step (2) can be started, for example,

(i) by initiating stirring of the aqueous fluoropolymer dispersion under treatment before, during, or after the above-mentioned addition in the above step (1) and, after addition of the nonionic surfactant at a temperature below the phase separation temperature, raising the temperature to the phase separation temperature and then decreasing the rate of stirring, or
(i-2) by initiating stirring of the aqueous fluoropolymer dispersion under treatment before, during or after the above-mentioned addition in the above step (1) and, after addition of the nonionic surfactant at a temperature below the phase separation temperature, raising the temperature to the phase separation temperature, then continuing the above stirring for a certain period of time and then decreasing the rate of stirring or stopping stirring, or
(ii) by initiating stirring of the aqueous fluoropolymer dispersion under treatment before, during or after the above-mentioned addition in the above step (1) and, after addition of the nonionic surfactant at a temperature below the phase separation temperature and uniformly blending the mixture, once stopping stirring, raising the temperature to the phase separation temperature and then again stirring the mixture, or

(iii) by raising, in the above step (1), the temperature beforehand to a level for phase separation of the aqueous fluoropolymer dispersion to be treated, then adding the nonionic surfactant and at the same time starting stirring and, after uniform admixture of the nonionic surfactant with the aqueous fluoropolymer dispersion, decreasing the rate of stirring.

The phase separation in the above step (2) is allowed to proceed by properly maintaining the aqueous fluoropolymer dispersion under treatment, with the nonionic surfactant added, at the phase separation temperature mentioned above.

The method of producing an aqueous fluoropolymer dispersion according to the invention comprises providing the aqueous fluoropolymer dispersion to be treated with stirring in the above step (2).

Conventionally, it has been thought necessary that, in producing aqueous fluoropolymer dispersions by phase separation, the mixture of the treatment target liquid and surfactant after arrival at the phase separation temperature be allowed to stand still so that the formation of the aqueous fluoropolymer dispersion phase and supernatant phase may not be disturbed.

On the contrary, it is a characteristic feature of the invention that even after arrival of the mixture of the treatment target aqueous fluoropolymer dispersion and nonionic surfactant at the phase separation temperature, the mixture liquid is given stirring so that the time until the volume ratio between the supernatant phase and the aqueous fluoropolymer dispersion phase as resulting from phase separation becomes constant can be shortened as compared with the prior art methods.

The mechanism by which the time required for phase separation by the method of the present invention can be shortened is not clear. Presumably, precursors (droplets) composed of molecules of the nonionic surfactant and water initiate the phase separation and the promotion of the union of such precursors by stirring results in rapid formation of the supernatant phase.

While the stirring in the above step (2) may be applied to the whole aqueous fluoropolymer dispersion to be treated, it is preferred, in view of the possibility of the rate of phase separation being maintained at a high level, that the stirring be provided to the aqueous fluoropolymer dispersion phase alone.

The phrase "stirring be provided to the aqueous fluoropolymer dispersion phase alone" as used hereinabove means that the aqueous fluoropolymer dispersion phase portion is stirred at a rate within a range within which the supernatant phase will not mix again into the aqueous fluoropolymer dispersion phase. Generally, the supernatant phase is formed as a transparent phase and the aqueous fluoropolymer dispersion phase as a turbid phase, so that an interface can be observed between both the phases. Thus, when the aqueous fluoropolymer dispersion phase is stirred at a rate such that the above-mentioned interface will not be destroyed, the aqueous fluoropolymer dispersion phase alone is stirred.

The stirring in the above step (2) is preferably carried out at the same or lower rate of stirring as compared with the stirring which can be made in the above-mentioned step (1).

The stirring in the above step (2) can be carried out at a rate about one half the rate of stirring in the above-mentioned step (1).

The rate of stirring in the above step (2) may be varied during that step. As for the change in rate of stirring, it is preferred that the rate of stirring be decreased during that step.

The stirring in the above step (2) is preferably carried out at a rate such that the aqueous fluoropolymer dispersion phase alone is given stirring, as described above.

The method of producing an aqueous fluoropolymer dispersion according to the invention comprises the step (3) of recovering the aqueous fluoropolymer dispersion phase mentioned above by removing the supernatant phase mentioned above.

The method of removing the supernatant phase is not particularly restricted but the removal can be carried out in a manner known in the art, for example by decantation.

The aqueous fluoropolymer dispersion obtained according to the present invention may be the very aqueous dispersion obtained as the aqueous fluoropolymer dispersion phase mentioned above or one derived from the aqueous fluoropolymer dispersion phase obtained by such an after-treatment as is known in the art, for example concentration adjustment by adding water or a nonionic surfactant or pH adjustment by adding aqueous ammonia, for instance.

The aqueous fluoropolymer dispersion preferably has a fluoropolymer concentration of not lower than 35% by mass, more preferably not lower than 45% by mass, still more preferably not lower than 55% by mass and, generally, it may be not higher than 75% by mass provided that it is within the range mentioned above. In this way, the method of producing an aqueous fluoropolymer dispersion according to the invention is also useful as a method of fluoropolymer concentration.

The aqueous fluoropolymer dispersion can be readily processed into fluoropolymer powders, fluoropolymer moldings and so forth. The fluoropolymer moldings obtained from the aqueous fluoropolymer dispersion are excellent in physical characteristics such as thermal stability, chemical resistance, durability, weather resistance, surface characteristics and mechanical characteristics, and the dispersion is useful as a material for lining cooking utensils and pipes/tubes, for impregnated glass cloth membranes and for binders for cells/batteries, among others.

EFFECTS OF THE INVENTION

The method of producing an aqueous fluoropolymer dispersion according to the invention, which has the constitution described hereinabove, can produce the aqueous fluoropolymer dispersion high in fluoropolymer concentration in a short period of time.

BEST MODES FOR CARRYING OUT THE INVENTION

The following working and comparative examples illustrate the invention in further detail. These examples are, however, by no means limitative of the scope of the invention.
In the working and comparative examples, "part (s)" means "part(s) by mass", unless otherwise specified.
The measurements made in each of the working and comparative examples were carried out by the methods described below.

1. Nonionic surfactant concentration and fluoropolymer concentration

About 1 g (X) of the sample was weighed in an aluminum cup with a diameter of 5 cm, the same was dried at 100°C for 1 hour to give a heating residue (Y) and further dried at 300°C for 1 hour to give a heating residue (Z), and calculations were made as follows:

$$N = (Y - Z)/X \times 100 \ (\%);$$

$$P = Z/X \times 100 \ (\%).$$

(In the above formulas, N is the nonionic surfactant concentration and P is the fluoropolymer concentration.)

2. Fluorinated anionic surfactant concentration in aqueous polytetrafluoroethylene dispersion

Measurements were made by the method (2) described hereinabove. To about 10 g of the aqueous polytetrafluoroethylene dispersion was added an equal amount of methanol for causing coagulation and, then, the Soxhlet extraction was carried out using 100 g of methanol at 90°C for 10 hours.

Example 1

An aqueous polytetrafluoroethylene [PTFE] dispersion (2500 g; fluoropolymer content 25%, ammonium perfluorooctanoate [PFOA] content 625 ppm) was placed in a cylindrical glass vessel having a capacity of 5 L and a diameter of 16 cm and equipped with a paddle type stirrer with a diameter of 6 cm, the pH of the dispersion was adjusted to 9 with a 10% aqueous solution of ammonia, and 122 g of Noigen TDS-80 (product name; Daiichi Kogyo Seiyaku's polyoxyethylene alkyl ether type nonionic surfactant; cloud point 58°C) was then added with stirring at 120 rpm, followed by uniform mixing in a warm water bath at 40°C. Then, with continued stirring, the vessel inside temperature was raised to 70°C in an hour by raising the warm water bath. At this point of time, the rate of stirring was set at 60 rpm, and the vessel inside temperature was maintained at 70°C. Immediately after the change in rate of stirring, the supernatant phase began to appear and it was observed that the volume proportion of the supernatant phase increased with the lapse of time. At 50 minutes after the change in rate of stirring, the volume proportion of the supernatant phase became almost constant, so that the stirring was discontinued and the resulting supernatant phase was removed and the aqueous fluoropolymer dispersion was recovered. The aqueous fluoropolymer dispersion phase obtained was the aqueous fluoropolymer dispersion according to the invention and had a fluoropolymer concentration of 64.9%.

Comparative Example 1

An aqueous polytetrafluoroethylene [PTFE] dispersion (2500 g; fluoropolymer content 25%, PFOA content 625 ppm) was placed in a cylindrical glass vessel having a capacity of 5 L and a diameter of 16 cm and equipped with a paddle type stirrer with a diameter of 6 cm, the pH of the dispersion was adjusted to 9 with a 10% aqueous solution of ammonia, and Noigen TDS-80 (122 g) was then added with stirring at 120 rpm, followed by uniform mixing in a warm water bath at 40°C. Then, with continued stirring, the vessel inside temperature was raised to 70°C in an hour by raising the warm water bath. At this point of time, the stirring was discontinued, and the vessel inside temperature was maintained at 70°C. After stopping the stirring, the supernatant phase began to appear and it was observed that the volume proportion of the supernatant phase increased with the lapse of time. At 120 minutes after stopping the stirring, the volume proportion of the supernatant phase became almost constant, so that the resulting supernatant phase was removed and the aqueous fluoropolymer dispersion was recovered. The aqueous fluoropolymer dispersion phase had a fluoropolymer concentration of 63.8%.
In view of the foregoing, it was revealed that the method of producing an aqueous fluoropolymer dispersion according to the invention (Example 1) can give an aqueous fluoropolymer dispersion higher in fluoropolymer concentration in a shorter period of time.

INDUSTRIAL APPLICABILITY

The method of producing an aqueous fluoropolymer dispersion according to the invention, which has the constitution described hereinabove, can produce aqueous fluoropolymer dispersions high in fluoropolymer concentration in a short period of time.

**Claims**

1.  A method of producing an aqueous fluoropolymer dispersion comprising:

    a step (1) of adding a nonionic surfactant to an aqueous fluoropolymer dispersion to be treated,
    a step (2) of phase-separating into a supernatant phase and an aqueous fluoropolymer dispersion phase following said step (1), and
    a step (3) of recovering said aqueous fluoropolymer dispersion phase by removing said supernatant phase,
    stirring being provided in said step (2).

2.  The method of producing an aqueous fluoropolymer dispersion according to claim 1,
    wherein the nonionic surfactant addition in the step (1) is made under conditions such that the temperature of the aqueous fluoropolymer dispersion to be treated is not higher than the temperature at which the phase separation in the step (2) is allowed to proceed.

3.  The method of producing an aqueous fluoropolymer dispersion according to claim 1 or 2,
    wherein the fluoropolymer particles in the aqueous fluoropolymer dispersion to be treated have an average particle diameter of 50 to 500 nm.

4.  The method of producing an aqueous fluoropolymer dispersion according to claim 1, 2 or 3,
    wherein the fluoropolymer is a perfluoropolymer.

5.  The method of producing an aqueous fluoropolymer dispersion according to claim 1, 2, 3 or 4,
    wherein the fluoropolymer is a polytetrafluoroethylene.

| INTERNATIONAL SEARCH REPORT | International application No. |
|---|---|
| | PCT/JP2006/307860 |

A.   CLASSIFICATION OF SUBJECT MATTER
*C08J3/03*(2006.01), *C08L27/12*(2006.01)

According to International Patent Classification (IPC) or to both national classification and IPC

B.   FIELDS SEARCHED

Minimum documentation searched (classification system followed by classification symbols)
C08J3/00-3/28, C08F6/00-6/28

Documentation searched other than minimum documentation to the extent that such documents are included in the fields searched

| Jitsuyo Shinan Koho | 1922-1996 | Jitsuyo Shinan Toroku Koho | 1996-2006 |
|---|---|---|---|
| Kokai Jitsuyo Shinan Koho | 1971-2006 | Toroku Jitsuyo Shinan Koho | 1994-2006 |

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| X | US 3301807 A  (Thiokol Chemical Corp.), 31 January, 1967 (31.01.67), Claims; examples (Family: none) | 1-5 |
| X | JP 52-21532 B2  (E.I. Du Pont De Nemours & Co.), 11 June, 1977 (11.06.77), Full text & DE 2145952 A       & US 3704272 A & GB 1319206 A       & CA 930090 A & FR 2106536 A | 1-5 |
| A | US 3037953 A  (E.I. Du Pont De Nemours & Co.), 05 June, 1962 (05.06.62), Full text (Family: none) | 1-5 |

| [X]    Further documents are listed in the continuation of Box C. | [ ]    See patent family annex. |
|---|---|

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09 May, 2006 (09.05.06) | 16 May, 2006 (16.05.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/307860 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 50-51148 A  (Allied Chemical Corp.),<br>07 May, 1975 (07.05.75),<br>Full text<br>& US 3778391 A | 1-5 |
| A | US 2559752 A  (E.I. Du Pont De Nemours & Co.),<br>10 July, 1951 (10.07.51),<br>Full text<br>(Family: none) | 1-5 |
| P,X | JP 2005-126715 A  (Solvay Solexis S.p.A.),<br>19 May, 2005 (19.05.05),<br>Full text<br>& EP 1526142 A1          & US 2005/107506 A1 | 1-5 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002532583 W